# EUROPEAN PATENT APPLICATION

(11) **EP 4 782 580 A1**
(43) Date of publication of application: **29.07.2026**
(21) Application number: 25761441.2
(22) Date of filing: 18.02.2025
(51) Int. Cl.: C25B 15/00, C25B 1/04, C25B 9/00, C25B 15/02

(54) **METHOD FOR OPERATING WATER ELECTROLYSIS APPARATUS, CONTROL DEVICE FOR WATER ELECTROLYSIS APPARATUS, AND HYDROGEN PRODUCTION FACILITY**

(30) Priority: 29.02.2024 JP 2024029700
(71) Applicant: Mitsubishi Heavy Industries, Ltd., Chiyoda-ku Tokyo 100-8332 (JP)
(72) Inventor: ICHINOSE, Hikaru, Tokyo 100-8332 (JP); TAMURA, Ken, Tokyo 100-8332 (JP); MOCHIDA, Shogo, Tokyo 100-8332 (JP)
(74) Representative: Studio Torta S.p.A.
(86) International application number: PCT/JP2025/005437
(87) International publication number: WO 2025/182682

(57) **Abstract**

An operation method for a water electrolyzer, including an electrolyzer for electrolyzing water, a hydrogen separator to which hydrogen generated in the electrolyzer is to be led, an oxygen separator to which oxygen generated in the electrolyzer is to be led, and a vent line for discharging gas from the hydrogen separator or the oxygen separator and a vent valve disposed in the vent line, includes: a step of stopping electrolysis of water in the electrolyzer; a step of determining whether a first indicator indicating an increase amount of an oxygen concentration in gas in the hydrogen separator or of a hydrogen concentration in gas in the oxygen separator after stopping the electrolysis exceeds a first threshold; and opening, when the first indicator exceeds the first threshold, the vent valve to decrease a pressure of the hydrogen separator or the oxygen separator to a first specified value.

## Description

### TECHNICAL FIELD

The present disclosure relates to an operation method for a water electrolyzer, a control system for a water electrolyzer, and a hydrogen production facility.

The present application claims priority based on Japanese Patent Application No. 2024-029700 filed on February 29, 2024, the entire content of which is incorporated herein by reference.

### BACKGROUND ART

In a water electrolyzer used for producing hydrogen, an explosion risk arises when the concentration ratio of hydrogen gas and oxygen gas is within a predetermined range in an anode chamber, a cathode chamber, or the like. For example, in order to avoid such a problem, an operation method has been proposed for suppressing mixing of hydrogen gas into gas on the anode side where oxygen gas is generated, or mixing of oxygen gas into gas on the cathode side where hydrogen gas is generated.

Patent Document 1 describes that after stopping electrolysis of water in a water electrolysis module (water electrolyzer), hydrogen gas in a cathode chamber and a gas-liquid separator on the cathode side is released to the atmosphere while water is supplied to the cathode chamber. In this way, by reducing the amount of hydrogen gas in the cathode chamber and preventing movement of hydrogen gas from the cathode chamber to an anode chamber by water supplied to the cathode chamber, it is designed to suppress mixing of hydrogen gas on the cathode side into oxygen gas on the anode side during the stop of electrolysis.

### Citation List

### Patent Literature

Patent Document 1: JP2020-186418A

### SUMMARY

### Problems to be Solved

Meanwhile, during a stop of the water electrolyzer, when the oxygen gas concentration in the gas on the cathode side or the hydrogen gas concentration in the gas on the anode side increases to raise the explosion risk, even if an attempt is made to restart the operation of the water electrolyzer, an interlock set according to these oxygen/hydrogen concentrations in the gas or the like is activated to cause an emergency stop (trip), and it may take time before the operation of the water electrolyzer is restarted and the product hydrogen gas can be supplied. In this regard, in the method described in Patent Document 1, since the mixing of hydrogen gas into the oxygen gas on the anode side is suppressed while the water electrolyzer is stopped, the increase in the hydrogen concentration in the gas on the anode side is suppressed, and there is a possibility that the above-described trip can be avoided.

On the other hand, in the method described in Patent Document 1, when the electrolysis of water in the water electrolyzer is stopped, hydrogen gas in the cathode chamber is released to the atmosphere and water is supplied to the cathode chamber. Therefore, when restarting the operation of the water electrolyzer thereafter, it is necessary to discharge water from the cathode chamber or increase the pressure of the gas-liquid separator on the cathode side, so that it takes a long time before the product hydrogen gas can be supplied.

In view of the above circumstances, an object of at least one embodiment of the present invention is to provide an operation method for a water electrolyzer, a control system for a water electrolyzer, and a hydrogen production facility capable of promptly restarting the supply of product hydrogen gas when restarting operation of the water electrolyzer after the operation is stopped.

### Solution to the Problems

An operation method for a water electrolyzer according to at least one embodiment of the present invention is an operation method for a water electrolyzer including:
an electrolyzer for electrolyzing water;
a hydrogen separator to which hydrogen generated in the electrolyzer is to be led;
an oxygen separator to which oxygen generated in the electrolyzer is to be led; and
a vent line for discharging gas from the hydrogen separator or the oxygen separator and a vent valve disposed in the vent line,
the operation method including:
a step of stopping electrolysis of water in the electrolyzer;
a step of determining whether a first indicator indicating an increase amount of an oxygen concentration in gas in the hydrogen separator or of a hydrogen concentration in gas in the oxygen separator after stopping the electrolysis exceeds a first threshold; and
opening, when the first indicator exceeds the first threshold, the vent valve to decrease a pressure of the hydrogen separator or the oxygen separator to a first specified value.

Further, a control system for a water electrolyzer according to at least one embodiment of the present invention is a control system for a water electrolyzer including:
an electrolyzer for electrolyzing water;
a hydrogen separator to which hydrogen generated in the electrolyzer is to be led;
an oxygen separator to which oxygen generated in the electrolyzer is to be led; and
a vent line for discharging gas from the hydrogen separator or the oxygen separator and a vent valve disposed in the vent line,
the control system including:
an indicator acquisition part configured to acquire a first indicator indicating an increase amount of an oxygen concentration in gas in the hydrogen separator or of a hydrogen concentration in gas in the oxygen separator after stopping electrolysis of water in the electrolyzer; and
a determination part configured to determine whether the first indicator exceeds a first threshold,
in which the control system is configured to open the vent valve to decrease a pressure of the hydrogen separator or the oxygen separator to a first specified value when the determination part determines that the first indicator exceeds the first threshold.

In addition, a hydrogen production facility according to at least one embodiment of the present invention includes:
a water electrolyzer including:
   an electrolyzer for electrolyzing water;
   a hydrogen separator to which hydrogen generated in the electrolyzer is to be led;
   an oxygen separator to which oxygen generated in the electrolyzer is to be led; and
   a vent line for discharging gas from the hydrogen separator or the oxygen separator and a vent valve disposed in the vent line; and
the above-described control system for controlling the water electrolyzer.

### Advantageous Effects

At least one embodiment of the present invention provides an operation method for a water electrolyzer, a control system for a water electrolyzer, and a hydrogen production facility capable of promptly restarting the supply of product hydrogen gas when restarting operation of the water electrolyzer after the operation is stopped.

### BRIEF DESCRIPTION OF DRAWINGS

FIG. 1 is a schematic configuration diagram of a hydrogen production facility according to an embodiment.
FIG. 2 is a schematic configuration diagram of a control system according to an embodiment.
FIG. 3 is a flowchart showing an operation method for a water electrolyzer according to an embodiment.
FIG. 4 is a graph showing an example of temporal change of a separator pressure in the operation method according to an embodiment.
FIG. 5 is a graph showing an example of temporal change of a separator pressure in the operation method according to an embodiment.
FIG. 6 is a flowchart showing an operation method for a water electrolyzer according to an embodiment.
FIG. 7 is a graph showing an example of temporal change of a separator pressure in the operation method according to an embodiment.
FIG. 8 is a graph showing an example of temporal change of a separator pressure in the operation method according to an embodiment.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

### (Configuration of hydrogen production facility)

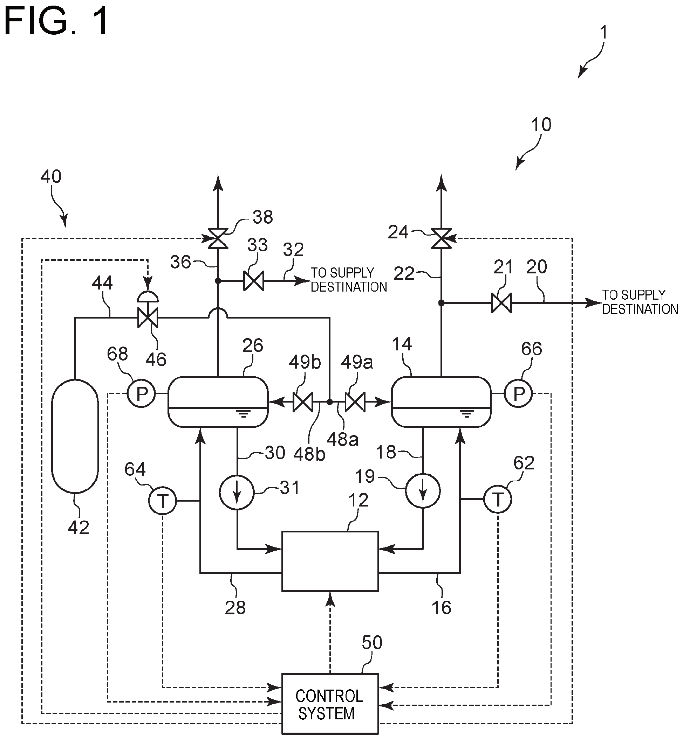

FIG. 1 is a schematic configuration diagram of a hydrogen production facility according to an embodiment. As shown in FIG. 1, a hydrogen production facility 1 according to an embodiment includes a water electrolyzer 10 for electrolyzing water, and a control system 50 for controlling the water electrolyzer 10.

The water electrolyzer 10 shown in FIG. 1 includes an electrolyzer 12 for electrolyzing water, a hydrogen separator 14 (gas-liquid separator) to which hydrogen (gas) generated in the electrolyzer 12 is to be led, and an oxygen separator 26 (gas-liquid separator) to which oxygen (gas) generated in the electrolyzer 12 is to be led. Further, the water electrolyzer 10 includes a vent line 22 for discharging the gas from the hydrogen separator 14 and a vent valve 24 disposed in the vent line 22, and a vent line 36 for discharging the gas from the oxygen separator 26 and a vent valve 38 disposed in the vent line 36. The vent line 22 may be provided so as to branch from a hydrogen gas line 20 described later. The vent line 36 may be provided so as to branch from an oxygen gas line 32 described later.

Water to be electrolyzed (makeup water) is supplied to the water electrolyzer 10 including the electrolyzer 12 through a makeup water line (not shown). The makeup water line may be connected to the hydrogen separator 14 or the oxygen separator 26.

In the water electrolyzer 10, water in the electrolyzer 12 is electrolyzed by applying a voltage between electrodes disposed in the electrolyzer 12, so that hydrogen is generated on the cathode side and oxygen is generated on the anode side. The water in the electrolyzer 12 may be water in which an electrolyte is dissolved (electrolyte solution). The electrolyte may be an alkaline substance such as potassium hydroxide (KOH).

Hydrogen gas generated on the cathode side is led to the hydrogen separator 14 via a cathode-side line 16, with water (electrolyte solution, etc.) contained. In the hydrogen separator 14, the hydrogen gas containing moisture is separated into hydrogen gas and water. The hydrogen gas (product hydrogen gas) separated in the hydrogen separator 14 is discharged from the hydrogen separator 14 through the hydrogen gas line 20. The water (electrolyte solution) separated in the hydrogen separator 14 is returned to the electrolyzer 12 through a return line 18. The hydrogen gas discharged from the hydrogen separator 14 may be supplied through the hydrogen gas line 20 to a hydrogen storage part (not shown) for storing hydrogen gas or to hydrogen consuming equipment (not shown) configured to consume hydrogen as a fuel or the like.

Oxygen gas generated on the anode side is led to the oxygen separator 26 via an anode-side line 28, with water (electrolyte solution, etc.) contained. In the oxygen separator 26, the oxygen gas containing moisture is separated into oxygen gas and water. The oxygen gas separated in the oxygen separator 26 is discharged from the oxygen separator 26 through the oxygen gas line 32. The water (electrolyte solution) separated in the oxygen separator 26 is returned to the electrolyzer 12 through a return line 30. The oxygen gas discharged from the oxygen separator 26 may be supplied through the oxygen gas line 32 to an oxygen storage part (not shown) or to oxygen consuming equipment (not shown).

As shown in the drawing, a hydrogen supply valve 21 may be provided in the hydrogen gas line 20, or an oxygen supply valve 33 may be provided in the oxygen gas line 32. In addition, a pump 19 for pumping water may be provided in the return line 18, and a pump 31 for pumping water may be provided in the return line 30.

The type of the water electrolyzer 10 constituting the hydrogen production facility 1 is not limited. The water electrolyzer 10 may be, for example, an alkaline water electrolyzer, a Polymer Electrolyte Membrane (PEM) water electrolyzer, or an Anion Exchange Membrane (AEM) water electrolyzer.

The vent valve 24 or the vent valve 38 may be electrically connected to the control system 50, and the opening/closing or opening degree of the vent valve 24 or the vent valve 38 may be controlled by the control system 50.

The hydrogen production facility 1 may include a temperature sensor for measuring the temperature of water (electrolyte solution, etc.) in the water electrolyzer 10. For example, as shown in FIG. 1, the hydrogen production facility 1 may include, as the temperature sensor, a temperature sensor 62 configured to measure the temperature of water (electrolyte solution, etc.) in the cathode-side line 16 and/or a temperature sensor 64 configured to measure the temperature of water (electrolyte solution, etc.) in the anode-side line 28. Alternatively, in some embodiments, the temperature sensor may be configured to measure the temperature of water (electrolyte solution, etc.) inside the return line 18, the return line 30, the electrolyzer 12, the hydrogen separator 14, or the oxygen separator 26.

The hydrogen production facility 1 may include a pressure sensor configured to measure the pressure of the hydrogen separator 14 or the oxygen separator 26. For example, as shown in FIG. 1, the hydrogen production facility 1 may include a pressure sensor 66 configured to measure the pressure of the hydrogen separator 14 and/or a pressure sensor 68 configured to measure the pressure of the oxygen separator 26.

The temperature sensors 62, 64 and/or the pressure sensors 66, 68 may be electrically connected to the control system 50, and signals indicating measurement results by the temperature sensors 62, 64 and/or the pressure sensors 66, 68 may be sent to the control system 50.

In some embodiments, the water electrolyzer 10 may include an inert gas supply part 40 for supplying an inert gas to the hydrogen separator 14 or the oxygen separator 26. The inert gas may include, for example, nitrogen or argon. As shown in FIG. 1, for example, the inert gas supply part 40 may include an inert gas storage part 42 which stores the inert gas, a supply line 44 disposed between the inert gas storage part 42 and the hydrogen separator 14 or the oxygen separator 26, and a supply valve 46 disposed in the supply line 44.

In the exemplary embodiment shown in FIG. 1, the supply line 44 includes a first branch portion 48a connected to the hydrogen separator 14 and a second branch portion 48b connected to the oxygen separator 26, and a first valve 49a and a second valve 49b are provided in the first branch portion 48a and the second branch portion 48b, respectively. Thus, the inert gas supply part 40 may supply the inert gas from the inert gas storage part 42 to the hydrogen separator 14 and the oxygen separator 26, and may individually adjust the inert gas supply amount to the hydrogen separator 14 and the inert gas supply amount to the oxygen separator 26. For example, the inert gas supply amount to the hydrogen separator 14 can be adjusted by adjusting the opening degree of the supply valve 46 and/or the first valve 49a. Alternatively, the inert gas supply amount to the oxygen separator 26 can be adjusted by adjusting the opening degree of the supply valve 46 and/or the second valve 49b.

The supply valve 46, the first valve 49a, and/or the second valve 49b may be electrically connected to the control system 50, and the opening/closing or opening degree of the supply valve 46, the first valve 49a, and/or the second valve 49b may be controlled by the control system 50.

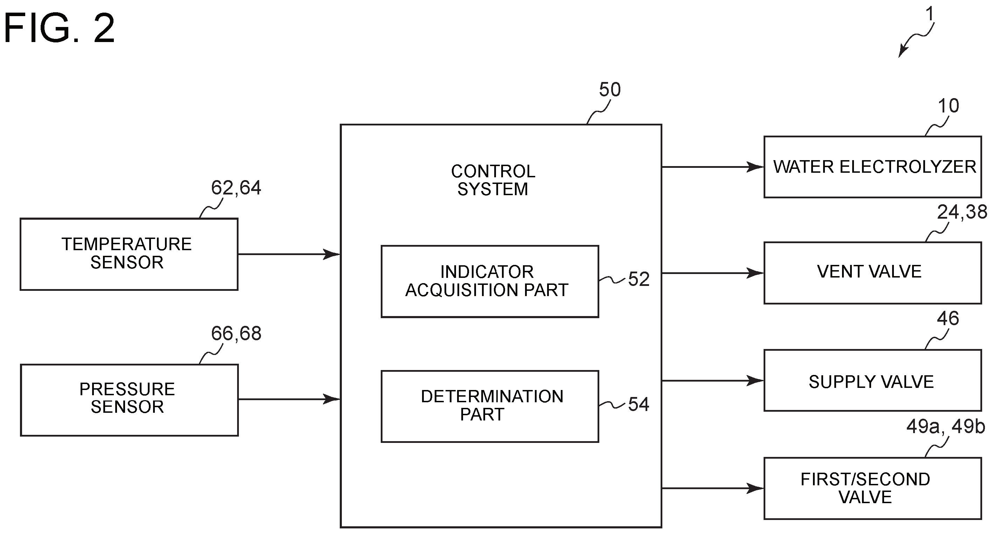

FIG. 2 is a schematic configuration diagram of the control system 50 according to an embodiment. As shown in FIG. 2, the control system 50 includes an indicator acquisition part 52 and a determination part 54.

The control system 50 includes a computer with a processor (such as CPU), a main storage device (memory device; such as RAM), an auxiliary storage device, an interface, and the like. The control system 50 is configured to receive signals indicating measurement results from the temperature sensors 62, 64 and/or the pressure sensors 66, 68 via the interface. The processor is configured to process the signals thus received. In addition, the processor is configured to process programs loaded into the main storage device. Thereby, the functions of the control system 50 including the indicator acquisition part 52 and/or the determination part 54 are realized.

The processing contents in the control system 50 may be implemented as programs executed by the processor. The programs may be stored in, for example, the auxiliary storage device. When the programs are executed, these programs are loaded into the main storage device. The processor is configured to read out the programs from the main storage device to execute instructions included in the programs.

The control system 50 may be configured to control stop and restart of electrolysis of water by the water electrolyzer 10 (i.e., stop and restart of application of a voltage between the electrodes disposed in the electrolyzer 12). The control system 50 may receive, for example, a stop command for stopping the electrolysis of water in the water electrolyzer 10 or a restart command for restarting the electrolysis of water from a host control system (not shown), and control the water electrolyzer 10 based on the stop command or the restart command.

The control system 50 may operate the vent valve 24, the vent valve 38, the supply valve 46, the first valve 49a, and/or the second valve 49b based on a determination result by the determination part 54 described later.

The indicator acquisition part 52 is configured to, when the electrolysis of water in the electrolyzer 12 is stopped, acquire a first indicator indicating the increase amount of the oxygen concentration in gas in the hydrogen separator 14 or of the hydrogen concentration in gas in the oxygen separator 26 after stopping the electrolysis.

The first indicator may include the elapsed time after stopping the electrolysis in the electrolyzer 12, or the temperature of water in the water electrolyzer 10. The indicator acquisition part 52 may acquire the elapsed time after stopping the electrolysis in the electrolyzer 12 using a timer built in the control system 50. The indicator acquisition part 52 may acquire the measurement result by the temperature sensor 62 or the temperature sensor 64 as the temperature of water in the water electrolyzer 10.

The determination part 54 is configured to determine whether the first indicator acquired by the indicator acquisition part 52 exceeds a first threshold T1. The first threshold T1 may be a value determined based on past operation records so that a trip of the water electrolyzer 10 due to high oxygen/hydrogen concentrations in the gas can be avoided.

The longer the elapsed time after stopping the electrolysis in the electrolyzer 12 is, the larger the movement amount of oxygen molecules to the cathode chamber or of hydrogen molecules to the anode chamber via the membrane in the electrolyzer 12 becomes, and thus the higher the oxygen/hydrogen concentrations in the gas tend to be. Therefore, when the first indicator is the elapsed time after stopping the electrolysis in the electrolyzer 12, the determination part 54 may determine that the first indicator exceeds the first threshold T1 when the first indicator becomes greater than the first threshold T1. The same applies to a second indicator and a second threshold T2, and a third indicator and a third threshold T3, which will be described later.

Also, the lower the temperature of the water in the water electrolyzer 10 is, the higher the dissolved oxygen concentration and the dissolved hydrogen concentration in the liquid phase become, and the larger the movement amount of oxygen molecules to the cathode chamber or of hydrogen molecules to the anode chamber via the membrane in the electrolyzer 12 becomes, and thus the higher the oxygen/hydrogen concentrations in the gas tend to be. Therefore, when the first indicator is the temperature of water in the water electrolyzer 10, the determination part 54 may determine that the first indicator exceeds the first threshold T1 when the first indicator becomes smaller than the first threshold T1. The same applies to a second indicator and a second threshold T2, and a third indicator and a third threshold T3, which will be described later.

The control system 50 may be configured to open the vent valve 24 or 38 to decrease the pressure of the hydrogen separator 14 or the oxygen separator 26 to a first specified value P1 when the determination part 54 determines that the first indicator exceeds the first threshold T1.

The control system 50 may be configured to operate the pump 19 or the pump 31 such that water circulates between the electrolyzer 12 and the hydrogen separator 14 or the oxygen separator 26 when decreasing the pressure of the hydrogen separator 14 or the oxygen separator 26 to the first specified value P1 as described above.

The above-described indicator acquisition part 52 may be configured to acquire a second indicator indicating the increase amount of the oxygen concentration in gas in the hydrogen separator 14 or of the hydrogen concentration in gas in the oxygen separator 26 after the pressure of the hydrogen separator 14 or the oxygen separator 26 reaches the first specified value P1.

The second indicator may include the elapsed time after the pressure of the hydrogen separator 14 or the oxygen separator 26 reaches the first specified value P1, or the temperature of water in the water electrolyzer 10. The indicator acquisition part 52 may acquire the elapsed time after the pressure of the hydrogen separator 14 or the oxygen separator 26 reaches the first specified value P1 using the measurement result by the pressure sensor 66 or 68 and the timer built in the control system 50. The indicator acquisition part 52 may acquire the measurement result by the temperature sensor 62 or the temperature sensor 64 as the temperature of water in the water electrolyzer 10.

The above-described determination part 54 may be configured to determine whether the second indicator acquired by the indicator acquisition part 52 exceeds a second threshold T2. The second threshold T2 may be a value determined based on past operation records so that a trip of the water electrolyzer 10 due to high oxygen/hydrogen concentrations in the gas can be avoided.

The control system 50 may be configured to replace at least part of the gas in the hydrogen separator 14 or the oxygen separator 26 with an inert gas by appropriately operating the vent valve 24 or 38, the supply valve 46, and the like when the determination part 54 determines that the second indicator exceeds the second threshold T2.

The control system 50 may be configured to determine whether the replacement is completed when the gas in the hydrogen separator 14 or the oxygen separator 26 is replaced with the inert gas.

The above-described indicator acquisition part 52 may be configured to acquire a third indicator indicating the increase amount of the oxygen concentration in gas in the hydrogen separator 14 or of the hydrogen concentration in gas in the oxygen separator 26 after the replacement of the gas in the hydrogen separator 14 or the oxygen separator 26 with the inert gas is completed.

The third indicator may include the elapsed time after the completion of the replacement, or the temperature of water in the water electrolyzer 10. The indicator acquisition part 52 may acquire the elapsed time after the completion of the replacement using the timer built in the control system 50. The indicator acquisition part 52 may acquire the measurement result by the temperature sensor 62 or the temperature sensor 64 as the temperature of water in the water electrolyzer 10.

The above-described determination part 54 may be configured to determine whether the third indicator acquired by the indicator acquisition part 52 exceeds a third threshold T3. The third threshold T3 may be a value determined based on past operation records so that a trip of the water electrolyzer 10 due to high oxygen/hydrogen concentrations in the gas can be avoided.

The control system 50 may be configured to replace at least part of the gas in the hydrogen separator 14 or the oxygen separator 26 with the inert gas again by appropriately operating the vent valve 24 or 38, the supply valve 46, and the like when the determination part 54 determines that the third indicator exceeds the third threshold T3.

### (Operation method for water electrolyzer)

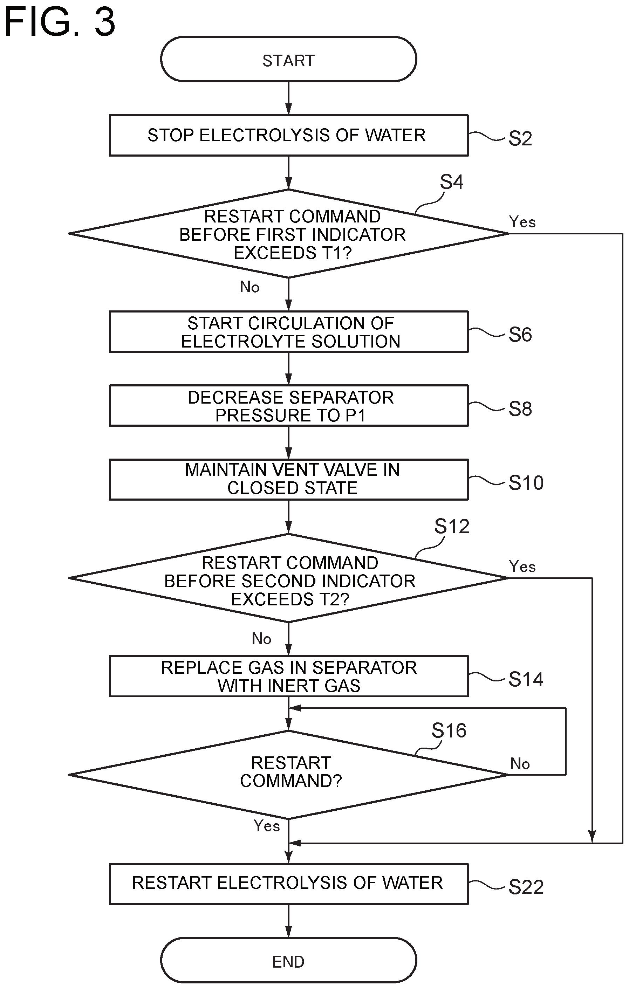

Next, an operation method for a water electrolyzer according to some embodiments will be described with reference to FIGs. 3 to 8. The following describes a case where the operation of the water electrolyzer 10 is controlled using the control system 50, but in some embodiments, part or all of the procedures described below may be performed manually.

In the following, operations in a hydrogen system including the hydrogen separator 14 will be described, but the same description can be applied to an oxygen system including the oxygen separator 26.

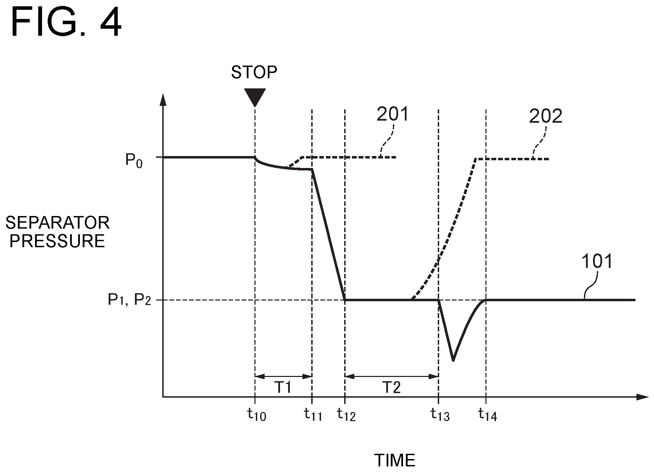

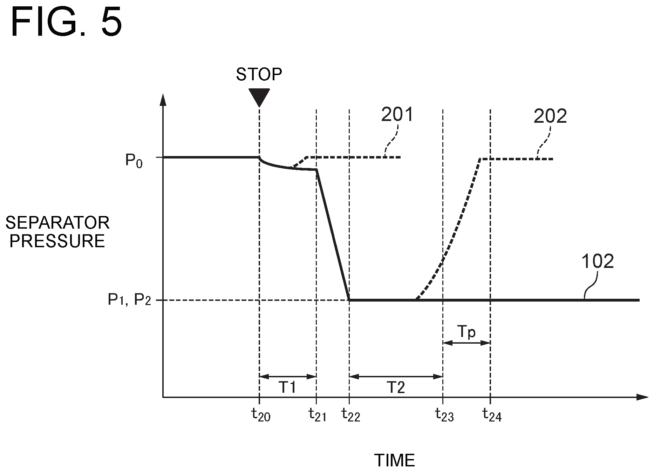

FIG. 3 is a flowchart showing an operation method for the water electrolyzer 10 according to an embodiment. FIGs. 4 and 5 are each a graph showing an example of temporal change of a separator pressure when executing the operation method according to an embodiment (solid line 101 in FIG. 4, solid line 102 in FIG. 5, and broken lines 201 and 202 in FIGs. 4 and 5).

As shown in FIG. 3, in an embodiment, first, the control system 50 stops the electrolysis of water by the water electrolyzer 10 (i.e., stops the operation of the water electrolyzer 10; S2; time t10 in FIG. 4, time t20 in FIG. 5). The control system 50 may stop the electrolysis of water in the water electrolyzer 10 based on, for example, a stop command from a host control system.

During normal operation of the water electrolyzer 10, that is, when a voltage is applied to the electrodes of the electrolyzer 12 to perform electrolysis of water and product hydrogen gas is supplied to a supply destination (period until times t10 and t20 in FIGs. 4 and 5), the vent valve 24 is closed and the hydrogen supply valve 21 is opened, and the pressure of the hydrogen separator 14 is substantially constant at an operating pressure P0. When stopping the electrolysis by the water electrolyzer 10 in step S2, the application of voltage to the electrodes of the electrolyzer 12 is stopped, and the hydrogen supply valve 21 is closed to stop the supply of product hydrogen gas. The vent valve 24 is maintained in a closed state.

Next, the determination part 54 determines whether the first indicator indicating the increase amount of the oxygen concentration in gas in the hydrogen separator 14 after stopping the electrolysis exceeds the first threshold T1 (S4). In the present embodiment, the elapsed time after stopping the electrolysis in the electrolyzer 12 is used as the first indicator. Further, a value set in advance based on operation records of the water electrolyzer 10 is used as the first threshold T1.

In a case where the electrolysis of water in the water electrolyzer 10 is restarted by a restart command from the host control system or the like before the first indicator exceeds the first threshold T1 (Yes in step S4), the electrolysis of water is restarted while maintaining the vent valve 24 in a closed state since the stop of the electrolysis in step S2 (i.e., the application of voltage to the electrodes of the electrolyzer 12 is restarted; S22). A change in the pressure of the hydrogen separator 14 in this case is represented by the broken line 201 in FIGs. 4 and 5.

In this case, the vent valve 24 is kept closed to maintain the gas in the hydrogen separator 14 without discharging it, and the electrolysis of water in the water electrolyzer 10 is restarted without decreasing the separator pressure, so that it is possible to shorten the required time to increase the separator internal pressure to the operating pressure P0 after restarting the electrolysis.

It should be noted that, during the period after stopping the electrolysis until the first indicator exceeds the first threshold T1 (t10 to t11 in FIG. 4 and t20 to t21 in FIG. 5), the separator pressure gradually decreases even with the vent valve 24 closed. This is because the temperatures of water in the water electrolyzer 10 and of the water electrolyzer 10 itself gradually decrease, since the stop of the voltage application to the electrodes causes current to stop flowing through the electrodes and the water in the electrolyzer 12.

On the other hand, in a case where the electrolysis of water in the water electrolyzer 10 is not restarted before the first indicator exceeds the first threshold T1, and the first indicator exceeds the first threshold T1 (No in step S4; t11 in FIG. 4, t21 in FIG. 5), the vent valve 24 is opened to decrease the pressure of the hydrogen separator 14 to the first specified value P1 (S8). At this time, the opening degree of the vent valve 24 may be adjusted based on the measurement result of the pressure sensor 66. When the pressure of the hydrogen separator 14 decreases to the first specified value P1, the vent valve 24 is closed (t12 in FIG. 4, t22 in FIG. 5), and the vent valve 24 is kept closed (S10).

Thus, when the first indicator exceeds the first threshold T1 and the oxygen concentration in the gas increases to some extent, the vent valve 24 is opened to decrease the separator pressure to the first specified value P1, and then the electrolysis of water in the water electrolyzer 10 is restarted in step S22, so that the operation of the water electrolyzer 10 can be restarted while suppressing an increase in the oxygen concentration in the gas in the hydrogen separator 14. Therefore, it is easy to avoid a trip due to a high oxygen concentration in the gas when the operation of the water electrolyzer 10 is restarted.

In addition, when the first indicator exceeds the first threshold T1 (No in step S4), water may be circulated between the electrolyzer 12 and the hydrogen separator 14 (S6). Then, in step S8, the pressure of the hydrogen separator 14 may be decreased to the first specified value P1 while circulating water between the electrolyzer 12 and the hydrogen separator 14.

In step S6, water may be circulated between the electrolyzer 12 and the hydrogen separator 14 via the cathode-side line 16 and the return line 18 by operating the pump 19.

Next, the determination part 54 determines whether the second indicator indicating the increase amount of the oxygen concentration in gas in the hydrogen separator 14 after the separator pressure reaches the first specified value P1 exceeds the second threshold T2 (S12). In the present embodiment, the elapsed time after the pressure of the hydrogen separator 14 reaches the first specified value P1 (i.e., time from t12 in FIG. 4 and t22 in FIG. 5) is used as the second indicator. Further, a value set in advance based on operation records of the water electrolyzer 10 is used as the second threshold T2.

In a case where the electrolysis of water in the water electrolyzer 10 is restarted by a restart command or the like from the host control system before the second indicator exceeds the second threshold T2 (Yes in step S12), the electrolysis of water is restarted without replacing the gas in the hydrogen separator 14 with the inert gas (i.e., without replacing the gas in the separator with the inert gas as described in step S14 later) (S22). A change in the pressure of the hydrogen separator 14 in this case is represented by the broken line 202 in FIGs. 4 and 5.

In this case, since the electrolysis of water in the water electrolyzer 10 is restarted without replacing the gas in the hydrogen separator 14 with the inert gas, compared to a case where the gas in the hydrogen separator 14 is replaced with the inert gas, the procedure of decreasing the inert gas concentration in the hydrogen separator 14 and increasing the purity of the hydrogen gas after restarting the electrolysis can be omitted, and the consumption amount of the inert gas can be suppressed.

On the other hand, in a case where the electrolysis of water in the water electrolyzer 10 is not restarted before the second indicator exceeds the second threshold T2, and the second indicator exceeds the second threshold T2 (No in step S12; t13 in FIG. 4, t23 in FIG. 5), at least part of the gas in the hydrogen separator 14 is replaced with the inert gas (S14).

Thus, when the second indicator exceeds the second threshold T2 and the oxygen concentration in the gas increases to some extent, at least part of the gas in the hydrogen separator 14 is replaced with the inert gas, thereby suppressing an increase in the oxygen concentration in the gas in the hydrogen separator 14. This makes it easier to avoid a trip due to a high oxygen concentration in the gas when restarting the operation of the water electrolyzer 10.

In step S14, as shown in FIG. 4, the vent valve 24 may be opened to decrease the pressure in the hydrogen separator 14 (a period after t13 in FIG. 4), and then, with the vent valve 24 closed, the inert gas may be supplied from the inert gas supply part 40 to the hydrogen separator to increase the pressure in the hydrogen separator 14 to a second specified value P2. In this case, when the pressure in the hydrogen separator 14 reaches the second specified value P2 (time t14 in FIG. 4), it may be determined that the replacement of the gas in the hydrogen separator 14 is completed, and the supply of the inert gas to the hydrogen separator 14 may be stopped. In the example shown in FIG. 4, the second specified value P2 is the same value as the first specified value P1, but the second specified value P2 may be different from the first specified value P1.

Alternatively, in step S14, as shown in FIG. 5, the vent valve 24 may be opened (time t23 in FIG. 5), and the inert gas may be supplied from the inert gas supply part 40 to the hydrogen separator 14 while keeping the vent valve 24 open. At this time, the inert gas may be supplied to the hydrogen separator 14 such that the pressure of the hydrogen separator 14 is maintained at the second specified value P2. In this case, when the elapsed time after starting the supply of the inert gas to the hydrogen separator 14 (t23 in FIG. 5) exceeds a threshold Tp (time t24 in FIG. 5), it may be determined that the replacement of the gas in the hydrogen separator 14 is completed, and the vent valve 24 may be closed and the supply of the inert gas to the hydrogen separator 14 may be stopped. In the example shown in FIG. 5, the second specified value P2 is the same value as the first specified value P1, but the second specified value P2 may be different from the first specified value P1.

After the start of the replacement of the gas in the hydrogen separator 14 in step S14, the electrolysis of water in the water electrolyzer 10 may be restarted (S22) upon receiving a restart command or the like from the host control system (Yes in step S16). In a case where the electrolysis of water in the water electrolyzer 10 is restarted while the inert gas is being supplied to the hydrogen separator 14, the electrolysis of water may be restarted after the supply valve 46 or the like is closed to stop the supply of the inert gas, and if the vent valve 24 is open, after the vent valve 24 is closed.

If water is circulated between the electrolyzer 12 and the hydrogen separator 14 after step S6, the electrolysis of water in the water electrolyzer 10 may be restarted in step S22 without stopping the pump 19. Alternatively, by stopping the pump 19, the circulation of water between the electrolyzer 12 and the hydrogen separator 14 may be stopped, and the electrolysis of water in the water electrolyzer 10 may be restarted in step S22.

According to the above-described method, after stopping the electrolysis of water in the water electrolyzer 10, it is determined whether the first indicator indicating the increase amount of the oxygen concentration in gas in the hydrogen separator 14 exceeds the first threshold T1, and when it exceeds, the vent valve 24 is opened to decrease the pressure of the hydrogen separator 14 to the first specified value P1.

Therefore, before the first indicator exceeds the first threshold T1, the gas in the hydrogen separator 14 is maintained without being discharged, and the electrolysis of water in the water electrolyzer 10 can be restarted without decreasing the separator pressure, so that the time required to increase the internal pressure of the separator to the operating pressure P0 after restarting the electrolysis is shortened. Further, when the first indicator exceeds the first threshold T1 and oxygen in the gas increases to some extent, the vent valve 24 is opened to decrease the separator pressure to the first specified value P1, so that the amount of oxygen gas in the hydrogen separator 14 and the cathode chamber or the anode chamber of the electrolyzer 12 decreases. Accordingly, the movement amount of the oxygen gas via the membrane separating the cathode chamber from the anode chamber of the electrolyzer 12 can be reduced. Therefore, an increase in the oxygen concentration in the gas in the hydrogen separator 14 can be suppressed, so that it is easy to avoid a trip due to high oxygen concentration in the gas when restarting the operation of the water electrolyzer 10.

Therefore, it is possible to promptly restart the supply of the product hydrogen gas when restarting the operation of the water electrolyzer 10 after the operation is stopped.

Further, according to the above-described method, after the first indicator exceeds the first threshold T1, by maintaining the vent valve 24 in a closed state after decreasing the separator pressure to the first specified value P1, the separator pressure is prevented from significantly decreasing from the first specified value P1, so that it is possible to suppress an increase in the time required to increase the separator pressure to the operating pressure P0 upon restart of the water electrolyzer 10.

Further, in the above-described method, it is determined whether the second indicator indicating the increase amount of the oxygen concentration in the gas after the separator pressure reaches the first specified value P1 exceeds the second threshold T2, and when it exceeds, at least part of the gas in the hydrogen separator 14 is replaced with the inert gas.

Thus, before the second indicator exceeds the second threshold T2, the electrolysis of water in the water electrolyzer 10 can be restarted without replacing the gas in the hydrogen separator 14 with the inert gas. As a result, compared to a case where the gas in the hydrogen separator 14 is replaced with the inert gas, it is possible to omit the procedure of decreasing the inert gas concentration in the hydrogen separator 14 and increasing the purity of the hydrogen gas after restarting the electrolysis, and it is possible to suppress the consumption amount of the inert gas. Also, when the second indicator exceeds the second threshold T2 and the oxygen concentration in the gas increases to some extent, at least part of the gas in the hydrogen separator 14 is replaced with the inert gas, thereby suppressing an increase in the oxygen concentration in the gas in the hydrogen separator 14. This makes it easier to avoid a trip due to high oxygen/hydrogen concentrations in the gas when restarting the operation of the water electrolyzer 10.

Therefore, it is possible to promptly restart the supply of the product hydrogen gas when restarting the operation of the water electrolyzer 10 after the operation is stopped.

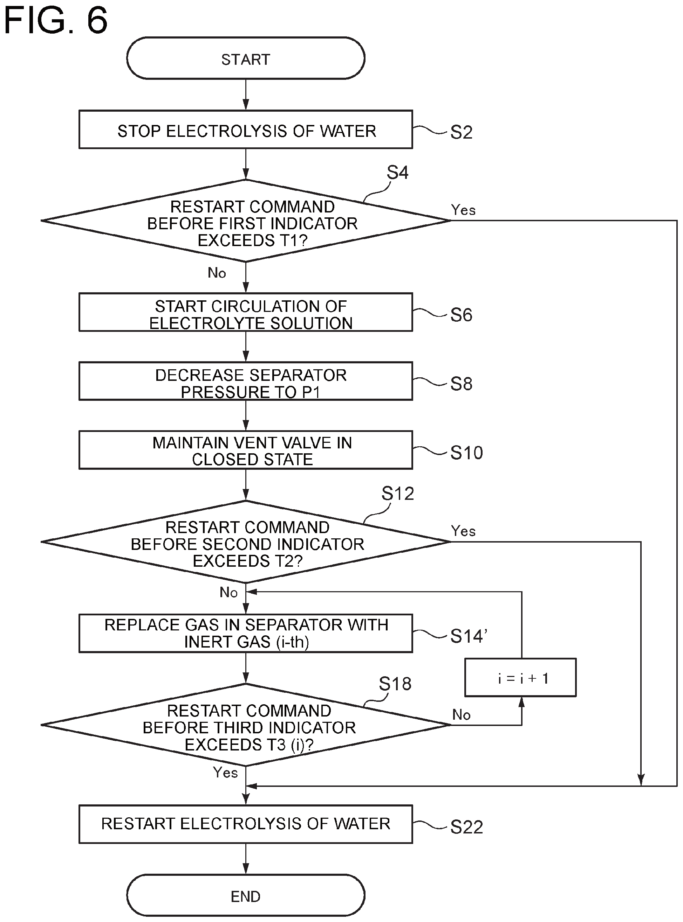

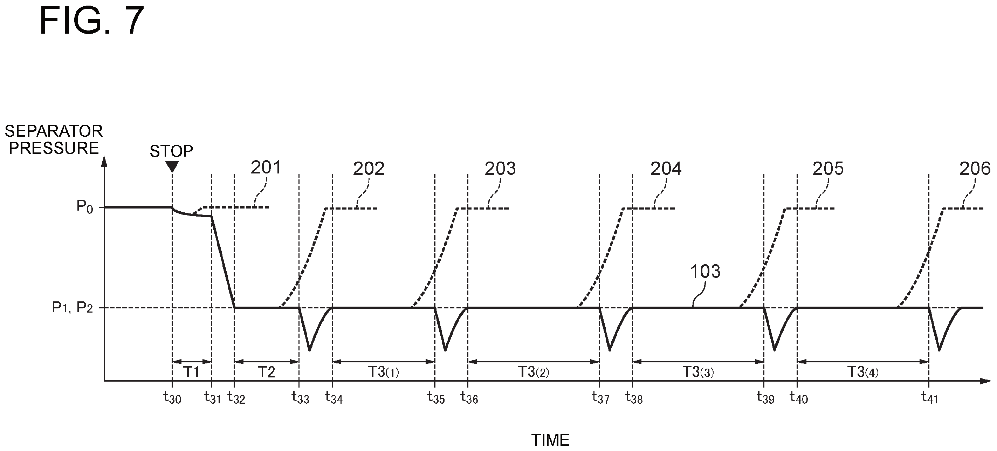

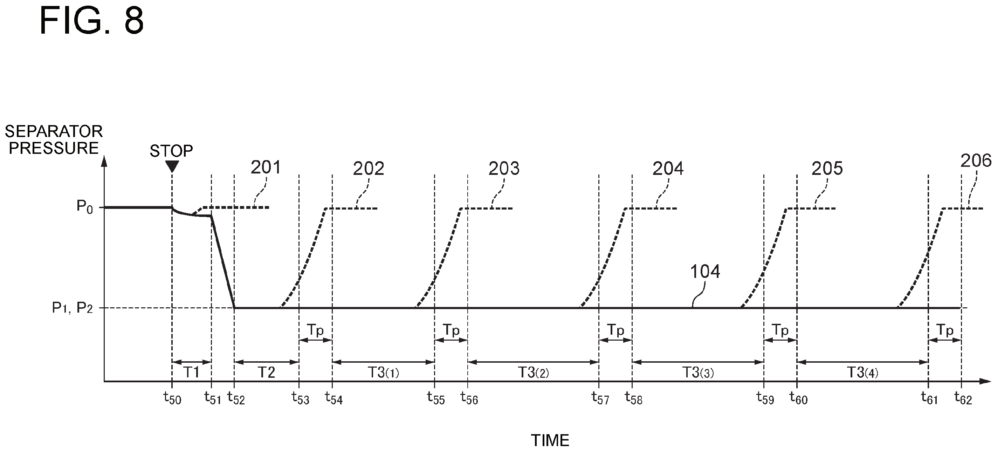

FIG. 6 is a flowchart showing an operation method for the water electrolyzer 10 according to an embodiment. FIGs. 7 and 8 are each a graph showing a temporal change in the separator pressure when executing the operation method according to an embodiment (solid line 103 in FIG. 7, solid line 104 in FIG. 8, broken lines 201 to 206 in FIGs. 7 and 8).

In the embodiment shown in FIG. 6, steps S2 to S12 and step S22 are the same as those in the embodiment shown in FIG. 3, and therefore descriptions thereof are omitted. Further, the range from time t30 to t34 in the graph of FIG. 7 and the range from time t50 to t54 in the graph of FIG. 8 are the same as the range from time t10 to t14 in the graph of FIG. 4 and the range from time t20 to t24 in the graph of FIG. 5, and therefore descriptions thereof are omitted.

In the embodiment shown in FIG. 6, in step S12, in a case where the electrolysis of water in the water electrolyzer 10 is not restarted before the second indicator exceeds the second threshold T2, and the second indicator exceeds the second threshold T2 (No in step S12; t33 in FIG. 7, t53 in FIG. 8), at least part of the gas in the hydrogen separator 14 is replaced with the inert gas ((i=1)-th replacement) (S14'). As will be described later, step S14' may be repeatedly performed multiple times depending on circumstances.

In step S14', similarly to step S14 in FIG. 3, the vent valve 24 may be opened to decrease the pressure in the hydrogen separator 14 (a period after t33 in FIG. 7), and then, with the vent valve 24 closed, the inert gas may be supplied from the inert gas supply part 40 to the hydrogen separator to increase the pressure in the hydrogen separator 14 to the second specified value P2. In this case, when the pressure in the hydrogen separator 14 reaches the second specified value P2 (time t34 in FIG. 7), it may be determined that the replacement of the gas in the hydrogen separator 14 is completed, and the supply of the inert gas to the hydrogen separator 14 may be stopped.

Alternatively, in step S14', similarly to step S14 in FIG. 3, the vent valve 24 may be opened (time t53 in FIG. 8), and the inert gas may be supplied from the inert gas supply part 40 to the hydrogen separator 14 while keeping the vent valve 24 open. At this time, the inert gas may be supplied to the hydrogen separator 14 such that the pressure of the hydrogen separator 14 is maintained at the second specified value P2. In this case, when the elapsed time after starting the supply of the inert gas to the hydrogen separator 14 (t53 in FIG. 8) exceeds the threshold Tp (time t54 in FIG. 8), it may be determined that the replacement of the gas in the hydrogen separator 14 is completed, and the vent valve 24 may be closed and the supply of the inert gas to the hydrogen separator 14 may be stopped.

Next, the determination part 54 determines whether the third indicator indicating the increase amount of the oxygen concentration in the gas in the hydrogen separator 14 after the i-th replacement of the gas in the hydrogen separator 14 is completed (t34 in FIG. 7, t54 in FIG. 8) exceeds a third threshold T3(i) (S12). That is, the third threshold when i=1 (first replacement) is T3(1). In the present embodiment, the elapsed time after the i-th replacement of the gas in the hydrogen separator 14 is completed (i.e., from t34 etc. in FIG. 7, from t54 etc. in FIG. 8) is used as the third indicator. Further, a value set in advance based on operation records of the water electrolyzer 10 is used as the third threshold T3(i).

After the completion of the i-th replacement of the gas in the hydrogen separator 14, in a case where the electrolysis of water in the water electrolyzer 10 is restarted by a restart command or the like from the host control system before the third indicator exceeds the third threshold T3(i) (Yes in step S18), the electrolysis of water is restarted as it is (S22). A change in the pressure of the hydrogen separator 14 in this case is represented by the broken lines 203 (i=1), 204 (i=2), 205 (i=3), and 206 (i=4) in FIGs. 7 and 8.

On the other hand, in a case where the electrolysis of water in the water electrolyzer 10 is not restarted before the third indicator exceeds the third threshold T3(i), and the third indicator exceeds the third threshold T3(i) (No in step S18; t35 etc. in FIG., t55 etc. in FIG. 8), at least part of the gas in the hydrogen separator 14 is replaced with the inert gas again (S14'). That is, the (i+1)-th replacement is performed.

Then, until the electrolysis of water in the water electrolyzer 10 is restarted by a restart command or the like from the host control system, step S18 of determining whether the third indicator exceeds the third threshold T3(i) and step S14' of performing the (i+1)-th replacement of the gas in the hydrogen separator 14 (step S14') when the third indicator exceeds the third threshold T3(i) are repeatedly performed (see t33 to t41 in FIG. 7 and t53 to t62 in FIG. 8).

When step S18 is repeatedly performed as described above, each third threshold T3(i) (T3(1), T3(2), T3(3), ..., etc.) may be a common value or may be different values.

According to the above-described method, once it is determined that the replacement of the gas in the hydrogen separator 14 with the inert gas is completed, it is determined whether the third indicator indicating the increase amount of the oxygen in the gas after the completion of the replacement exceeds the third threshold T3(i), and when it exceeds, at least part of the gas in the hydrogen separator is replaced with the inert gas again. That is, even when time has elapsed after the completion of the first replacement, the gas in the hydrogen separator is replaced with the inert gas again, so that the increase in the oxygen concentration in the gas in the hydrogen separator can be kept under control. This makes it easier to avoid a trip due to a high oxygen concentration in the gas when restarting the operation of the water electrolyzer 10. Therefore, it is possible to promptly restart the supply of the product hydrogen gas when restarting the operation of the water electrolyzer 10 after the operation is stopped.

The contents described in the above embodiments would be understood as follows, for instance.
[1] An operation method for a water electrolyzer (10) according to at least one embodiment of the present invention is an operation method for a water electrolyzer including:
   an electrolyzer (12) for electrolyzing water;
   a hydrogen separator (14) to which hydrogen generated in the electrolyzer is to be led;
   an oxygen separator (26) to which oxygen generated in the electrolyzer is to be led; and
   a vent line (22, 36) for discharging gas from the hydrogen separator or the oxygen separator and a vent valve (24, 38) disposed in the vent line,
   the operation method including:
      a step (S2) of stopping electrolysis of water in the electrolyzer;
      a step (S4) of determining whether a first indicator indicating an increase amount of an oxygen concentration in gas in the hydrogen separator or of a hydrogen concentration in gas in the oxygen separator after stopping the electrolysis exceeds a first threshold; and
      opening, when the first indicator exceeds the first threshold (T1), the vent valve to decrease a pressure of the hydrogen separator or the oxygen separator to a first specified value (P1).

According to the method [1], after stopping the electrolysis of water in the water electrolyzer, it is determined whether the first indicator indicating the increase amount of the oxygen concentration in gas in the hydrogen separator or of the hydrogen concentration in gas in the oxygen separator (hereinafter, also referred to as oxygen/hydrogen concentrations in the gas) exceeds the first threshold, and when it exceeds, the vent valve is opened to decrease the pressure of the hydrogen separator or the oxygen separator (hereinafter, also referred to as separator pressure) to the first specified value.

Therefore, before the first indicator exceeds the first threshold, the gas in the separator is maintained without being discharged, and the electrolysis of water in the water electrolyzer can be restarted without decreasing the separator pressure, so that the time required to increase the internal pressure of the separator to the operating pressure after restarting the electrolysis is shortened. Further, when the first indicator exceeds the first threshold and the oxygen/hydrogen concentrations in the gas increase to some extent, the vent valve is opened to decrease the separator pressure to the first specified value, so that the amount of oxygen gas or hydrogen gas in the hydrogen separator or the oxygen separator and the cathode chamber or the anode chamber of the electrolyzer decreases. Accordingly, the movement amount of the oxygen gas or the hydrogen gas via the membrane separating the cathode chamber and the anode chamber of the electrolyzer can be reduced. Therefore, an increase in the oxygen/hydrogen concentrations in the gas in the separator can be suppressed, so that it is easy to avoid a trip due to high oxygen/hydrogen concentrations in the gas when restarting the operation of the water electrolyzer.

Therefore, it is possible to promptly restart the supply of the product hydrogen gas when restarting the operation of the water electrolyzer after the operation is stopped.

[2] In some embodiments, in the above method [1], the operation method for a water electrolyzer further includes a step (S22) of restarting the electrolysis of water in the electrolyzer, including:
in a case where the electrolysis of water is restarted before the first indicator exceeds the first threshold, restarting the electrolysis of water while maintaining the vent valve in a closed state since the stop of the electrolysis, and
in a case where the electrolysis of water is restarted after the first indicator exceeds the first threshold, restarting the electrolysis of water after opening the vent valve to decrease the pressure of the hydrogen separator or the oxygen separator to the first specified value after the first indicator exceeds the first threshold.

According to the method [2], before the first indicator exceeds the first threshold, the vent valve is closed to maintain the gas in the separator without discharging it, and the electrolysis of water in the water electrolyzer is restarted without decreasing the separator pressure, so that the time required to increase the internal pressure of the separator to the operating pressure after restarting the electrolysis is shortened. Further, when the first indicator exceeds the first threshold and the oxygen/hydrogen concentrations in the gas increase to some extent, the vent valve is opened to decrease the separator pressure to the first specified value, and then the electrolysis of water in the water electrolyzer is restarted, so that the operation of the water electrolyzer is restarted while suppressing an increase in the oxygen/hydrogen concentrations in the gas in the separator. This makes it easier to avoid a trip due to high oxygen/hydrogen concentrations in the gas when restarting the operation of the water electrolyzer. Therefore, it is possible to promptly restart the supply of the product hydrogen gas when restarting the operation of the water electrolyzer after the operation is stopped.

[3] In some embodiments, in the above method [1] or [2], the first indicator includes an elapsed time after stopping the electrolysis, or a temperature of water in the water electrolyzer.

Since molecules of dissolved hydrogen gas in water (solution) in the cathode chamber of the electrolyzer or dissolved oxygen gas in water in the anode chamber of the electrolyzer are small in size, they can gradually move to the anode chamber or the cathode chamber, respectively, via the membrane separating the cathode chamber and the anode chamber. During a stop of the operation of the water electrolyzer (i.e., during a stop of the electrolysis of water), if the separator pressure and the pressures of the anode chamber and the cathode chamber do not decrease significantly, the oxygen/hydrogen concentrations in the gas in the anode chamber or the cathode chamber and the separator are considered to gradually increase due to the movement of the hydrogen gas or the oxygen gas via the membrane. For this reason, the elapsed time after stopping the electrolysis in the water electrolyzer can be appropriately used as the first indicator indicating the increase amount of the oxygen/hydrogen concentrations in the gas in the separator after stopping the electrolysis.

Also, after the operation of the water electrolyzer is stopped, the temperature of water in the water electrolyzer gradually decreases. However, the lower the water temperature is, the higher the dissolved hydrogen gas concentration or the dissolved oxygen gas concentration becomes, and thus the movement of the dissolved hydrogen gas or the dissolved oxygen gas in the water via the membrane occurs more easily, so that the oxygen/hydrogen concentrations in the gas in the anode chamber or the cathode chamber and the separator are considered to gradually increase. For this reason, the temperature of water in the water electrolyzer can be appropriately used as the first indicator indicating the increase amount of the oxygen/hydrogen concentrations in the gas in the separator after stopping the electrolysis in the water electrolyzer.

Therefore, according to the method [3], since the first indicator including the elapsed time after stopping the electrolysis or the temperature of water in the water electrolyzer is used, by comparing the first indicator with the first threshold, it is possible to appropriately determine whether the oxygen/hydrogen in the gas in the separator has increased by a predetermined degree.

[4] In some embodiments, in any of the above methods [1] to [3], the operation method for a water electrolyzer includes:
a step (S10) of maintaining the vent valve in a closed state after decreasing the pressure of the hydrogen separator or the oxygen separator to the first specified value after the first indicator exceeds the first threshold;
a step (S12) of determining whether a second indicator indicating an increase amount of the oxygen concentration in gas in the hydrogen separator or of the hydrogen concentration in gas in the oxygen separator after the pressure reaches the first specified value exceeds a second threshold (T2); and
performing, when the second indicator exceeds the second threshold, a replacement step (S14, S14') of replacing at least part of the gas in the hydrogen separator or the oxygen separator with an inert gas.

In the method [4], after the first indicator exceeds the first threshold, by maintaining the vent valve in a closed state after decreasing the separator pressure to the first specified value, the separator pressure is prevented from significantly decreasing from the first specified value, so that it is possible to suppress an increase in the time required to increase the separator pressure to the operating pressure upon restart of the water electrolyzer.

Further, it is determined whether the second indicator indicating the increase amount of the oxygen/hydrogen concentrations in the gas after the separator pressure reaches the first specified value exceeds the second threshold, and when it exceeds, at least part of the gas in the separator is replaced with the inert gas.

Thus, before the second indicator exceeds the second threshold, the electrolysis of water in the water electrolyzer can be restarted without replacing the gas in the separator with the inert gas. As a result, compared to a case where the gas in the separator is replaced with the inert gas, it is possible to omit the procedure of decreasing the inert gas concentration in the separator and increasing the purity of the hydrogen gas or the oxygen gas after restarting the electrolysis, and it is possible to suppress the consumption amount of the inert gas. Also, when the second indicator exceeds the second threshold and the oxygen/hydrogen concentrations in the gas increase to some extent, at least part of the gas in the separator is replaced with the inert gas, thereby suppressing an increase in the oxygen/hydrogen concentrations in the gas in the separator. This makes it easier to avoid a trip due to high oxygen/hydrogen concentrations in the gas when restarting the operation of the water electrolyzer.

Therefore, it is possible to promptly restart the supply of the product hydrogen gas when restarting the operation of the water electrolyzer after the operation is stopped.

[5] In some embodiments, in the above method [4], the operation method includes:
in a case where the electrolysis of water is restarted before the second indicator exceeds the second threshold, restarting the electrolysis of water without replacing the gas in the hydrogen separator or the oxygen separator with the inert gas; and
in a case where the electrolysis of water is restarted after the second indicator exceeds the second threshold, restarting the electrolysis of water after performing the replacement step after the second indicator exceeds the second threshold.

According to the method [5], before the second indicator exceeds the second threshold, the electrolysis of water in the water electrolyzer is restarted without replacing the gas in the separator with the inert gas. As a result, compared to a case where the gas in the separator is replaced with the inert gas, it is possible to omit the procedure of decreasing the inert gas concentration in the separator and increasing the purity of the hydrogen gas or the oxygen gas after restarting the electrolysis, and it is possible to suppress the consumption amount of the inert gas. Further, when the second indicator exceeds the second threshold and the oxygen/hydrogen concentrations in the gas increase to some extent, the electrolysis of water is restarted after replacing at least part of the gas in the separator with the inert gas, so that the operation of the water electrolyzer is restarted while suppressing an increase in the oxygen/hydrogen concentrations in the gas in the separator. This makes it easier to avoid a trip due to high oxygen/hydrogen concentrations in the gas when restarting the operation of the water electrolyzer.

Therefore, it is possible to promptly restart the supply of the product hydrogen gas when restarting the operation of the water electrolyzer after the operation is stopped.

[6] In some embodiments, in the above method [4] or [5], the second indicator includes an elapsed time after the pressure of the hydrogen separator or the oxygen separator reaches the first specified value, or a temperature of water in the water electrolyzer.

During a stop of the operation of the water electrolyzer, if the separator pressure and the pressures of the anode chamber and the cathode chamber do not decrease significantly, the oxygen/hydrogen concentrations in the gas in the anode chamber or the cathode chamber and the separator are considered to gradually increase due to the movement of the hydrogen gas or the oxygen gas via the membrane. For this reason, the elapsed time after the separator pressure reaches the first specified value can be appropriately used as the second indicator indicating the increase amount of the oxygen/hydrogen concentrations in the gas in the separator after the separator pressure reaches the first specified value.

Also, along with the decrease in the temperature of water in the water electrolyzer, the dissolved hydrogen gas concentration or the dissolved oxygen gas concentration becomes higher, and the movement of the dissolved hydrogen gas or the dissolved oxygen gas in the water via the membrane occurs more easily. Therefore, the temperature of water in the water electrolyzer can be appropriately used as the second indicator indicating the increase amount of the oxygen/hydrogen concentrations in the gas in the separator after the separator pressure reaches the first specified value.

Therefore, according to the method [6], since the second indicator including the elapsed time after the separator pressure reaches the first specified value or the temperature of water in the water electrolyzer is used, by comparing the second indicator with the second threshold, it is possible to appropriately determine whether the oxygen/hydrogen in the gas in the separator has increased by a predetermined degree.

[7] In some embodiments, in any of the above methods [4] to [6], the replacement step includes opening the vent valve to decrease the pressure in the hydrogen separator or the oxygen separator, followed by supplying, with the vent valve closed, the inert gas to the hydrogen separator or the oxygen separator to increase the pressure in the hydrogen separator or the oxygen separator to a second specified value (P2).

According to the method [7], by opening the vent valve to release the gas in the hydrogen separator or the oxygen separator and decrease the pressure, and then, with the vent valve closed, supplying the inert gas to the hydrogen separator or the oxygen separator to increase the separator pressure to the second specified value, at least part of the gas in the separator can be appropriately replaced with the inert gas.

[8] In some embodiments, in any of the above methods [4] to [6], the replacement step includes opening the vent valve, and supplying the inert gas to the hydrogen separator or the oxygen separator while keeping the vent valve open.

According to the method [8], by opening the vent valve and supplying the inert gas to the hydrogen separator or the oxygen separator while keeping the vent valve open, at least part of the gas in the separator can be appropriately replaced with the inert gas.

[9] In some embodiments, in any of the above methods [4] to [7], the operation method for a water electrolyzer includes:
a step of determining whether the replacement of at least part of the gas in the hydrogen separator or the oxygen separator with the inert gas in the replacement step is completed;
a step (S18) of determining whether a third indicator indicating an increase amount of the oxygen concentration in gas in the hydrogen separator or of the hydrogen concentration in gas in the oxygen separator after the completion of the replacement exceeds a third threshold (T3); and
performing the replacement step (S14') again when the third indicator exceeds the third threshold.

According to the method [9], when it is determined that the replacement of the gas in the hydrogen separator or the oxygen separator with the inert gas is completed, it is determined whether the third indicator indicating the increase amount of the oxygen/hydrogen concentrations in the gas after the completion of the replacement exceeds the third threshold, and when it exceeds, at least part of the gas in the separator is replaced with the inert gas again. That is, even when time has elapsed after the completion of the first replacement, the gas in the separator is replaced with the inert gas again, so that the increase in the oxygen/hydrogen concentrations in the gas in the separator can be kept under control. This makes it easier to avoid a trip due to high oxygen/hydrogen concentrations in the gas when restarting the operation of the water electrolyzer. Therefore, it is possible to promptly restart the supply of the product hydrogen gas when restarting the operation of the water electrolyzer after the operation is stopped.

[10] In some embodiments, in the above method [9], the operation method includes, in a case where the electrolysis of water is restarted after the third indicator exceeds the third threshold, restarting the electrolysis of water after performing the replacement step again after the third indicator exceeds the third threshold.

According to the method [10], after it is determined that the replacement of the gas in the hydrogen separator or the oxygen separator with the inert gas is completed, when the third indicator indicating the increase amount of the oxygen/hydrogen concentrations in the gas after the completion of the replacement exceeds the third threshold, the electrolysis of water is restarted after replacing at least part of the gas in the separator with the inert gas again. Therefore, the operation of the water electrolyzer is restarted while suppressing the increase in the oxygen/hydrogen concentrations in the gas in the separator, so that it is easy to avoid a trip due to high oxygen/hydrogen concentrations in the gas when restarting the operation of the water electrolyzer. Therefore, it is possible to promptly restart the supply of the product hydrogen gas when restarting the operation of the water electrolyzer after the operation is stopped.

[11] In some embodiments, in any of the above methods [1] to [10], the operation method includes, when the vent valve is opened to decrease the pressure of the hydrogen separator or the oxygen separator to the first specified value after the first indicator exceeds the first threshold, circulating the water between the electrolyzer and the hydrogen separator or the oxygen separator.

According to the method [11], after the stop of the electrolysis of water in the water electrolyzer, when the vent valve is opened to decrease the separator pressure to the first specified value after the first indicator exceeds the first threshold, the water is circulated between the electrolyzer and the separator, so that the dissolved oxygen gas and the dissolved hydrogen gas in the liquid phase are easily released into the gas phase. As a result, the dissolved oxygen gas concentration and the dissolved hydrogen gas concentration in the water are reduced, so that the movement of the dissolved hydrogen gas or the dissolved oxygen gas in the water via the membrane is less likely to occur, and the oxygen/hydrogen concentrations in the gas in the anode chamber or the cathode chamber and the separator are less likely to increase. Therefore, according to the method [11], it is easy to avoid a trip due to high oxygen/hydrogen concentrations in the gas when restarting the operation of the water electrolyzer. Therefore, the supply of the product hydrogen gas can be promptly restarted easily when restarting the operation of the water electrolyzer after the operation is stopped.

[12] A control system (50) for a water electrolyzer according to at least one embodiment of the present invention is a control system for a water electrolyzer including:
an electrolyzer (12) for electrolyzing water;
a hydrogen separator (14) to which hydrogen generated in the electrolyzer is to be led;
an oxygen separator (26) to which oxygen generated in the electrolyzer is to be led; and
a vent line (22, 36) for discharging gas from the hydrogen separator or the oxygen separator and a vent valve (24, 38) disposed in the vent line,

the control system including:
   an indicator acquisition part (52) configured to acquire a first indicator indicating an increase amount of an oxygen concentration in gas in the hydrogen separator or of a hydrogen concentration in gas in the oxygen separator after stopping electrolysis of water in the electrolyzer; and
   a determination part (54) configured to determine whether the first indicator exceeds a first threshold,
in which the control system is configured to open the vent valve to decrease a pressure of the hydrogen separator or the oxygen separator to a first specified value (P1) when the determination part determines that the first indicator exceeds the first threshold.

According to the configuration [12], after stopping the electrolysis of water in the water electrolyzer, it is determined whether the first indicator indicating the increase amount of the oxygen concentration in gas in the hydrogen separator or of the hydrogen concentration in gas in the oxygen separator (hereinafter, also referred to as oxygen/hydrogen concentrations in the gas) exceeds the first threshold, and when it exceeds, the vent valve is opened to decrease the pressure of the hydrogen separator or the oxygen separator (hereinafter, also referred to as separator pressure) to the first specified value.

Therefore, before the first indicator exceeds the first threshold, the gas in the separator is maintained without being discharged, and the electrolysis of water in the water electrolyzer can be restarted without decreasing the separator pressure, so that the time required to increase the internal pressure of the separator to the operating pressure after restarting the electrolysis is shortened. Further, when the first indicator exceeds the first threshold and the oxygen/hydrogen concentrations in the gas increase to some extent, the vent valve is opened to decrease the separator pressure to the first specified value, so that the amount of oxygen gas or hydrogen gas in the hydrogen separator or the oxygen separator and the cathode chamber or the anode chamber of the electrolyzer decreases. Accordingly, the movement amount of the oxygen gas or the hydrogen gas via the membrane separating the cathode chamber and the anode chamber of the electrolyzer can be reduced. Therefore, an increase in the oxygen/hydrogen concentrations in the gas in the separator can be suppressed, so that it is easy to avoid a trip due to high oxygen/hydrogen concentrations in the gas when restarting the operation of the water electrolyzer.

Therefore, it is possible to promptly restart the supply of the product hydrogen gas when restarting the operation of the water electrolyzer after the operation is stopped.

[13] A hydrogen production facility (1) according to at least one embodiment of the present invention includes:
a water electrolyzer (10) including:
   an electrolyzer (12) for electrolyzing water;
   a hydrogen separator (14) to which hydrogen generated in the electrolyzer is to be led;
   an oxygen separator (26) to which oxygen generated in the electrolyzer is to be led; and
   a vent line (22, 36) for discharging gas from the hydrogen separator or the oxygen separator and a vent valve (24, 38) disposed in the vent line; and
the control system (50) described in the above [12] for controlling the water electrolyzer.

According to the configuration [13], after stopping the electrolysis of water in the water electrolyzer, it is determined whether the first indicator indicating the increase amount of the oxygen concentration in gas in the hydrogen separator or of the hydrogen concentration in gas in the oxygen separator (hereinafter, also referred to as oxygen/hydrogen concentrations in the gas) exceeds the first threshold, and when it exceeds, the vent valve is opened to decrease the pressure of the hydrogen separator or the oxygen separator (hereinafter, also referred to as separator pressure) to the first specified value.

Therefore, before the first indicator exceeds the first threshold, the gas in the separator is maintained without being discharged, and the electrolysis of water in the water electrolyzer can be restarted without decreasing the separator pressure, so that the time required to increase the internal pressure of the separator to the operating pressure after restarting the electrolysis is shortened. Further, when the first indicator exceeds the first threshold and the oxygen/hydrogen concentrations in the gas increase to some extent, the vent valve is opened to decrease the separator pressure to the first specified value, so that the amount of oxygen gas or hydrogen gas in the hydrogen separator or the oxygen separator and the cathode chamber or the anode chamber of the electrolyzer decreases. Accordingly, the movement amount of the oxygen gas or the hydrogen gas via the membrane separating the cathode chamber and the anode chamber of the electrolyzer can be reduced. Therefore, an increase in the oxygen/hydrogen concentrations in the gas in the separator can be suppressed, so that it is easy to avoid a trip due to high oxygen/hydrogen concentrations in the gas when restarting the operation of the water electrolyzer.

Therefore, it is possible to promptly restart the supply of the product hydrogen gas when restarting the operation of the water electrolyzer after the operation is stopped.

Embodiments of the present invention were described in detail above, but the present invention is not limited thereto, and various amendments and modifications may be implemented.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", and "have" are not intended to be exclusive of other components.

### Reference Signs List

- 1: Hydrogen production facility
- 10: Water electrolyzer
- 12: Electrolyzer
- 14: Hydrogen separator
- 16: Cathode-side line
- 18: Return line
- 19: Pump
- 20: Hydrogen gas line
- 21: Hydrogen supply valve
- 22: Vent line
- 24: Vent valve
- 26: Oxygen separator
- 28: Anode-side line
- 30: Return line
- 31: Pump
- 32: Oxygen gas line
- 33: Oxygen supply valve
- 36: Vent line
- 38: Vent valve
- 40: Inert gas supply part
- 42: Inert gas storage part
- 44: Supply line
- 46: Supply valve
- 48a: First branch portion
- 48b: Second branch portion
- 49a: First valve
- 49b: Second valve
- 50: Control system
- 52: Indicator acquisition part
- 54: Determination part
- 62: Temperature sensor
- 64: Temperature sensor
- 66: Pressure sensor
- 68: Pressure sensor

## Claims

1. An operation method for a water electrolyzer,
the water electrolyzer including:
an electrolyzer for electrolyzing water;
a hydrogen separator to which hydrogen generated in the electrolyzer is to be led;
an oxygen separator to which oxygen generated in the electrolyzer is to be led; and
a vent line for discharging gas from the hydrogen separator or the oxygen separator and a vent valve disposed in the vent line,
the operation method comprising:
a step of stopping electrolysis of water in the electrolyzer;
a step of determining whether a first indicator indicating an increase amount of an oxygen concentration in gas in the hydrogen separator or of a hydrogen concentration in gas in the oxygen separator after stopping the electrolysis exceeds a first threshold; and
opening, when the first indicator exceeds the first threshold, the vent valve to decrease a pressure of the hydrogen separator or the oxygen separator to a first specified value.

2. The operation method for a water electrolyzer according to claim 1, further comprising a step of restarting the electrolysis of water in the electrolyzer, including:
in a case where the electrolysis of water is restarted before the first indicator exceeds the first threshold, restarting the electrolysis of water while maintaining the vent valve in a closed state since the stop of the electrolysis; and
in a case where the electrolysis of water is restarted after the first indicator exceeds the first threshold, restarting the electrolysis of water after opening the vent valve to decrease the pressure of the hydrogen separator or the oxygen separator to the first specified value after the first indicator exceeds the first threshold.

3. The operation method for a water electrolyzer according to claim 1 or 2,
wherein the first indicator includes an elapsed time after stopping the electrolysis, or a temperature of water in the water electrolyzer.

4. The operation method for a water electrolyzer according to claim 1 or 2, comprising:
a step of maintaining the vent valve in a closed state after decreasing the pressure of the hydrogen separator or the oxygen separator to the first specified value after the first indicator exceeds the first threshold;
a step of determining whether a second indicator indicating an increase amount of the oxygen concentration in gas in the hydrogen separator or of the hydrogen concentration in gas in the oxygen separator after the pressure reaches the first specified value exceeds a second threshold; and
performing, when the second indicator exceeds the second threshold, a replacement step of replacing at least part of the gas in the hydrogen separator or the oxygen separator with an inert gas.

5. The operation method for a water electrolyzer according to claim 4, including:
in a case where the electrolysis of water is restarted before the second indicator exceeds the second threshold, restarting the electrolysis of water without replacing the gas in the hydrogen separator or the oxygen separator with the inert gas; and
in a case where the electrolysis of water is restarted after the second indicator exceeds the second threshold, restarting the electrolysis of water after performing the replacement step after the second indicator exceeds the second threshold.

6. The operation method for a water electrolyzer according to claim 4,
wherein the second indicator includes an elapsed time after the pressure of the hydrogen separator or the oxygen separator reaches the first specified value, or a temperature of water in the water electrolyzer.

7. The operation method for a water electrolyzer according to claim 4,
wherein the replacement step includes opening the vent valve to decrease the pressure in the hydrogen separator or the oxygen separator, followed by supplying, with the vent valve closed, the inert gas to the hydrogen separator or the oxygen separator to increase the pressure in the hydrogen separator or the oxygen separator to a second specified value.

8. The operation method for a water electrolyzer according to claim 4,
wherein the replacement step includes opening the vent valve, and supplying the inert gas to the hydrogen separator or the oxygen separator while keeping the vent valve open.

9. The operation method for a water electrolyzer according to claim 4, comprising:
a step of determining whether the replacement of at least part of the gas in the hydrogen separator or the oxygen separator with the inert gas in the replacement step is completed;
a step of determining whether a third indicator indicating an increase amount of the oxygen concentration in gas in the hydrogen separator or of the hydrogen concentration in gas in the oxygen separator after the completion of the replacement exceeds a third threshold; and
performing the replacement step again when the third indicator exceeds the third threshold.

10. The operation method for a water electrolyzer according to claim 9, including
in a case where the electrolysis of water is restarted after the third indicator exceeds the third threshold, restarting the electrolysis of water after performing the replacement step again after the third indicator exceeds the third threshold.

11. The operation method for a water electrolyzer according to claim 1 or 2, including:
when the vent valve is opened to decrease the pressure of the hydrogen separator or the oxygen separator to the first specified value after the first indicator exceeds the first threshold, circulating the water between the electrolyzer and the hydrogen separator or the oxygen separator.

12. A control system for a water electrolyzer,
the water electrolyzer including:
an electrolyzer for electrolyzing water;
a hydrogen separator to which hydrogen generated in the electrolyzer is to be led;
an oxygen separator to which oxygen generated in the electrolyzer is to be led; and
a vent line for discharging gas from the hydrogen separator or the oxygen separator and a vent valve disposed in the vent line,
the control system comprising:
an indicator acquisition part configured to acquire a first indicator indicating an increase amount of an oxygen concentration in gas in the hydrogen separator or of a hydrogen concentration in gas in the oxygen separator after stopping electrolysis of water in the electrolyzer; and
a determination part configured to determine whether the first indicator exceeds a first threshold,
wherein the control system is configured to open the vent valve to decrease a pressure of the hydrogen separator or the oxygen separator to a first specified value when the determination part determines that the first indicator exceeds the first threshold.

13. A hydrogen production facility, comprising:
a water electrolyzer including:
an electrolyzer for electrolyzing water;
a hydrogen separator to which hydrogen generated in the electrolyzer is to be led;
an oxygen separator to which oxygen generated in the electrolyzer is to be led; and
a vent line for discharging gas from the hydrogen separator or the oxygen separator and a vent valve disposed in the vent line; and
the control system according to claim 12 for controlling the water electrolyzer.
